# EUROPÄISCHE PATENTANMELDUNG

(11) **EP 2 131 080 A1**
(43) Veröffentlichungstag der Anmeldung: **09.12.2009**
(21) Anmeldenummer: 08010297.3
(22) Anmeldetag: 05.06.2008
(51) Int. Cl.: F16J 15/46, F16J 15/00

(54) **Mäanderdichtungssystem**

(71) Anmelder: Leitner, Ernst, A-5671 Bruck/Glstr (AT); Prebeck, Franz, 94327 Bogen/Fürth (DE); Koch, Hans-Jürgen, 83253 Rimsting (DE)
(72) Erfinder: Leitner, Ernst, 5671 Bruck (AT)
(74) Vertreter: Schmitz, Hans-Werner

(57) **Zusammenfassung**

Die Erfindung, das Mäanderdichtsystem, ermöglicht das sichere Abdichten von Fugen zwischen aneinander gepressten Körpern (1), deren Eigenschaft bzw. Oberflächenbeschaffenheit die sichere Abdichtung gegen Flüssigkeitsdurchfluss mit bisher bekannten Dichtungssystemen nicht zulässt, dadurch, dass wenigstens 2 oder nach Bedarf n - fach in Fugendurchflussrichtung hintereinander angeordnete Dichtungsprofile (2) in direkter Folge abwechselnd am linken bzw. rechten angepressten Körper (1) abdichten und durch diese Dichtungsfugen durchdringende abzuleitende Flüssigkeit (3) nie auf der selben soeben durchflossenen Fugenseite in eine undichte Stelle der darauf folgenden Dichtungsfuge dringt, sondern so eine undichte Stelle nur durch ihre Umlenkung zur Dichtungsfuge am gegenüberliegenden angepressten Körper (1) erreichen kann, sodass die Flüssigkeit (3) auf diesem Weg schon vorher in die Flüssigkeitsabführende Rinne (4) des Dichtungsprofiles (2) gelangt, in welcher sie in Längsrichtung der Dichtungsprofile (2) aus dem Fugensystem zwischen den beiden aneinander gepressten Körpern (1) abgeleitet wird.

## Beschreibung

Die Erfindung ist in all jenen technischen Bereichen anwendbar, in denen wenigstens zwei Körper so aneinandergepresst werden, dass ein Flüssigkeitsdurchtritt durch die Fuge zwischen den beiden Körpern vermieden wird.

Diese Anwendung gilt insbesondere für jene Körper, deren Oberflächeneigenschaft und Beschaffenheit eine hundertprozentige Abdichtung durch bisher bekannte Dichtungssysteme nicht ermöglicht. Als Beispiel werden pneumatische Schlauchkissenkonstruktionen angeführt, bei denen die nicht gänzlich auszuschließende Faltenbildung in der Folie der Kissen im Bereich der Kontaktstelle zum Dichtungsprofil eine sichere Abdichtung gegen Flüssigkeitsdurchtritt durch bisher bekannte Dichtungssysteme unmöglich macht.

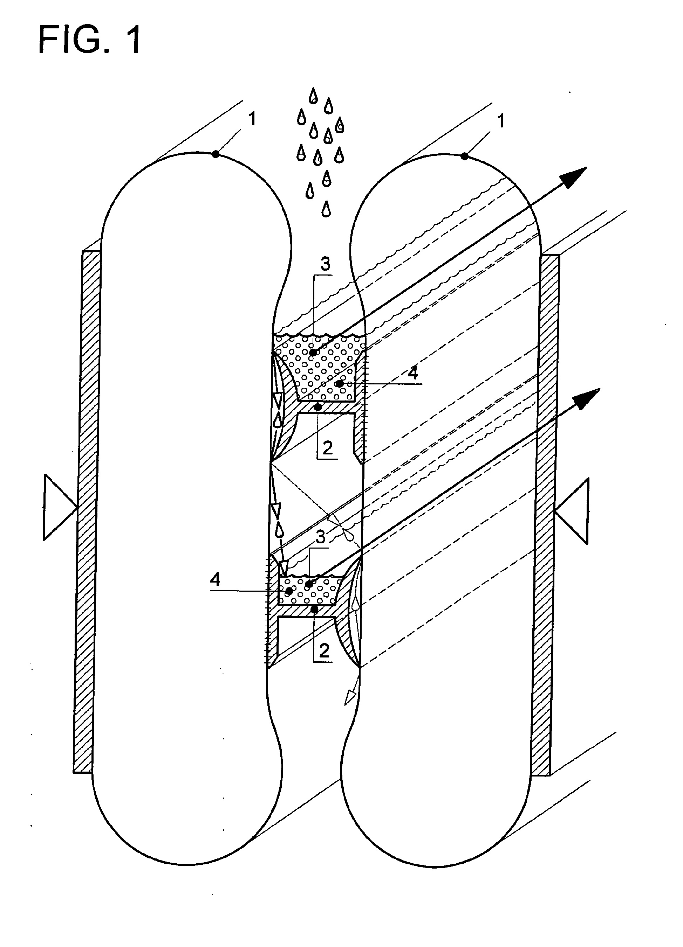

Fig. 1 zeigt eine axonometrische Darstellung des Dichtungssystemes;
Fig. 2 zeigt ein Dichtungsprofil in Axonometrie.

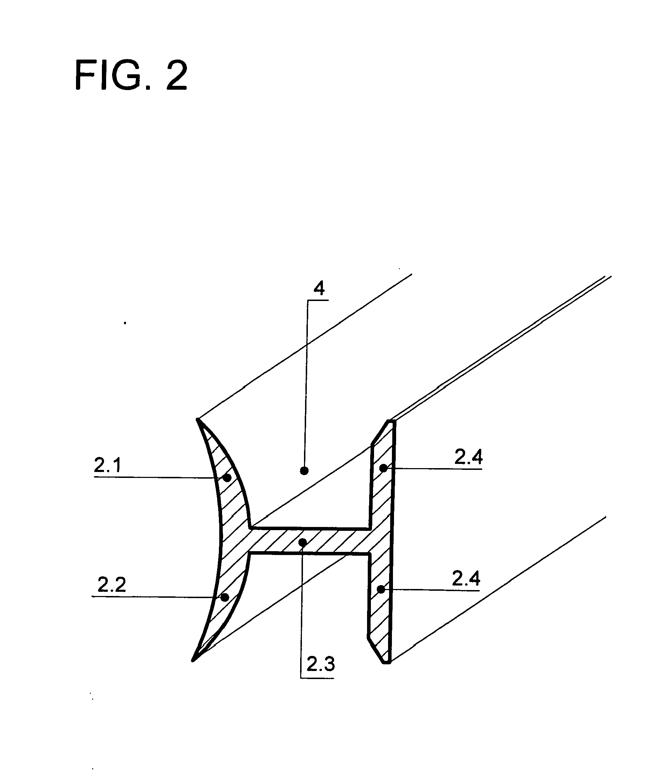

Durch die am jeweils entgegengesetzten Körper 1 flüssigkeitsdicht befestigten Dichtungsprofile 2 und durch die Unteren Leitstege 2.2 an den Dichtungsprofilen 2 wird jene Flüssigkeit 3, welche auf Grund von undichten Kontaktstellen zwischen dem angepressten Körper 1 und dem Oberen Dichtungssteg 2.1 (Fig. 2) des Dichtungsprofiles 2 eindringt, konsequent auf der Seite dieser undichten Stelle gehalten und in die darauf folgende flüssigkeitsabführende Rinne 4 geleitet, sodass verhindert wird, dass die Flüssigkeit 3 von einer undichten Stelle zwischen dem Dichtungsprofil 2 und dem angepressten Körper 1 unmittelbar in eine undichte Stelle zwischen dem nächstfolgenden Dichtungsprofil 2 und dem angepressten Körper 1 eindringt. Die Flüssigkeit 3 wird so direkt in die flüssigkeitsabführende Rinne 4 geleitet, in welcher sie in weiterer Folge parallel zur Längsrichtung der Dichtungsprofile 2 aus dem Bereich zwischen den beiden Körpern 1 abgeleitet wird.

Die kontrolliert abzuleitende Flüssigkeitsmenge 3 ergibt bei den jeweiligen technischen Anwendungen die notwendige Querschnittsdimension der Dichtungsprofile 2 bzw. deren Anzahl im Fugenbereich zwischen den beiden Körpern 1.

Die Dichtungsprofile 2 sind mittels der Befestigungsstege 2.4 an den jeweiligen Körpern 1 flüssigkeitsdicht und dauerhaft befestigt.

Die Distanzstege 2.3 sichern den nötigen Abstand zwischen den beiden Körpern 1, und sind in ihrem Detailquerschnitt auch so auszubilden, dass elektrische Rinnenheizungen ohne weitere Befestigungsmittel in diese Distanzstege 2.3 dauerhaft integriert werden können.

Die Dichtungsprofile 2 sind je nach Anwendung so elastisch und stabil herzustellen, dass sie unter dem Anpressdruck der beiden Körper 1 zugleich eine maximal mögliche Anpassungsfähigkeit und damit Abdichtungsfähigkeit an den angepressten Körper 1 aufweisen.

Die Erfindung, das Mäanderdichtsystem, ermöglicht das sichere Abdichten von Fugen zwischen aneinander gepressten Körpern (1), deren Eigenschaft bzw. Oberflächenbeschaffenheit die sichere Abdichtung gegen Flüssigkeitsdurchfluss mit bisher bekannten Dichtungssystemen nicht zulässt, dadurch, dass wenigstens 2 oder nach Bedarf n - fach in Fugendurchflussrichtung hintereinander angeordnete Dichtungsprofile (2) in direkter Folge abwechselnd am linken bzw. rechten angepressten Körper (1) abdichten und durch diese Dichtungsfugen durchdringende abzuleitende Flüssigkeit (3) nie auf der selben soeben durchflossenen Fugenseite in eine undichte Stelle der darauf folgenden Dichtungsfuge dringt, sondern so eine undichte Stelle nur durch ihre Umlenkung zur Dichtungsfuge am gegenüberliegenden angepressten Körper (1) erreichen kann, sodass die Flüssigkeit (3) auf diesem Weg schon vorher in die Flüssigkeitsabführende Rinne (4) des Dichtungsprofiles (2) gelangt, in welcher sie in Längsrichtung der Dichtungsprofile (2) aus dem Fugensystem zwischen den beiden aneinander gepressten Körpern (1) abgeleitet wird.

### Bezugszeichenaufstellung:

- 1: Körper
- 2: Dichtungsprofil
- 2.1: Oberer Dichtungssteg
- 2.2: Unterer flüssigkeitsweisender Steg
- 2.3: Distanzsteg
- 2.4: Befestigungssteg
- 3: Abzuleitende Flüssigkeit
- 4: Flüssigkeitsabführende Rinne

## Patentansprüche

1. Dichtungssystem zur Abdichtung von aneinander gepressten Körpern ( 1 ), vorzugsweise Schläuchen, **dadurch gekennzeichnet, dass** sich in der Fuge zwischen den beiden Körpern (1) mindestens zwei in Fließrichtung der Flüssigkeit nacheinander angeordnete Dichtungsprofile (2) befinden, die mit der einen Seite abwechselnd an je einem Körper (1) flüssigkeitsdicht befestigt sind und an der anderen Seite an dem anderen Körper (1) eine verminderte Flüssigkeitsmenge durchlassen, sodass ein mäanderartiger Durchfluss entsteht.

2. Dichtungssystem nach Anspruche 1, **dadurch gekennzeichnet, dass** ein Unterer flüssigkeitsweisender Steg (2.2) des Dichtungsprofils (2) derart ausgebildet ist, dass er die verminderte Flüssigkeitsmenge nur entlang dieses anderen Körpers zum darauf folgenden Dichtungsprofil (2) durchlässt.

3. Dichtungssystem nach Anspruch 1, **dadurch gekennzeichnet, dass** die aneinander gepressten Körper (1) Schläuche sind.

4. Dichtungssystem nach Anspruch 3, **dadurch gekennzeichnet, dass** die aneinander gepressten Schläuche eine Schlauchkissenkonstruktion bilden.

5. Dichtungssystem nach einem der Ansprüche 1 - 4, **dadurch gekennzeichnet, dass** die Dichtungsprofile ( 2 ) durch Formgebung und Materialauswahl derart flexibel gefertigt sind, dass in ihrer Anpressung an den jeweils angrenzenden Körper (1) eine maximal mögliche Abdichtung gegen Durchfluss von Flüssigkeit ( 3 ) entsteht.

6. Dichtungssystem nach einem der Ansprüche 1 - 5, **dadurch gekennzeichnet, dass** die Dichtungsprofile ( 2 ) je einen Oberen Dichtungssteg ( 2.1 ) aufweisen, welcher durch die Anpressung an den benachbarten Körper (1) einen flüssigkeitsabdichtenden Kontakt bildet.

7. Dichtungssystem nach Anspruch 6, **dadurch gekennzeichnet, dass** das Dichtungsprofil ( 2 ) einen Unteren flüssigkeitsweisenden Leitsteg ( 2.2 ) aufweist, welcher verhindert, dass jene Flüssigkeit ( 3 ), die durch undichte Kontaktstellen zwischen dem Oberen Dichtungssteg (2.1 ) des Dichtungsprofiles ( 2 ) und der daran gepressten Außenfläche des Körpers (1 ) entlang der Außenfläche des angrenzenden angepressten Körpers (1) durchtritt, direkt in eine undichte Kontaktstelle zwischen dem Oberen Dichtungssteg (2.1) des nächstfolgenden Dichtungsprofiles ( 2 ) und der daran gepressten Außenfläche des Körpers (1) eindringt.

8. Dichtungssystem nach Anspruch 7, **dadurch gekennzeichnet, dass** das Dichtungsprofil ( 2 ) einen Unteren flüssigkeitsweisenden Leitsteg ( 2.2 ) aufweist, welches jene Flüssigkeit ( 3 ), die durch undichte Kontaktstellen zwischen dem Oberen Dichtungssteg (2.1 ) des Dichtungsprofiles ( 2 ) und der daran gepressten Außenflächen des Körper (1 ) entlang der Außenfläche der angrenzenden angepressten Körper (1) durchtritt, direkt in die flüssigkeitsabführende Rinne (4) des darauf folgenden Dichtungsprofiles ( 2 ) einleitet.

9. Dichtungssystem nach Anspruch 8, **dadurch gekennzeichnet, dass** durch die flüssigkeitsabführende Rinne (4 ) die abzuleitende Flüssigkeit ( 3 ) parallel zur Längsrichtung des Dichtungsprofiles (2 ) aus dem Bereich zwischen den beiden aneinander gepressten Körpern ( 1 ) leitbar ist.

10. Dichtungssystem nach einem der Ansprüche 7 - 9, **dadurch gekennzeichnet, dass** das Dichtungsprofil ( 2 ) einen Rinnen bildenden horizontalen Distanzsteg ( 2.3 ) aufweist, dessen Querschnitt derart ausgebildet ist, dass die beiden Außenflächen der aneinander gepressten Körper (1) ausreichend und stabil in Distanz gehalten sind, sodass ein direkter unmittelbarer Durchfluss von Flüssigkeit ( 3 ) durch materialbedingte undichte Kontaktstellen im Bereich des oberen Dichtungsprofiles ( 2 ) in undichte Kontaktstellen im Bereich des darunter angeordneten Dichtungsprofiles (2) verhindert ist.

11. Dichtungssystem nach Anspruch 10, **dadurch gekennzeichnet, dass** der Rinnen bildende Distanzsteg ( 2.3 ) eine solche Querschnittsform aufweist, dass eine elektrische Rinnenheizung ohne weitere Befestigungsmittel fixierbar ist.

12. Dichtungssystem nach einem der Ansprüche 1 - 11, **dadurch gekennzeichnet, dass** die Dichtungsprofile ( 2 ) Befestigungsstege ( 2.4 ) aufweisen, mittels derer die Dichtungsprofile ( 2 ) flüssigkeitsdicht und dauerhaft an den aneinander zu pressenden Körpern (1) zu befestigen sind.

13. Dichtungssystem nach einem der Ansprüche 1 - 12, **dadurch gekennzeichnet, dass** je nach Notwendigkeit durch die Anbringung von weiteren abwechselnd gegengleich angeordneten Dichtungsprofilen (2) die Menge der Flüssigkeitsabführung durch das Profilsystem, in Längsrichtung der Dichtungsprofile ( 2 ) aus den Bereich der aneinander gepressten Körper (1) hinaus, kontrollierbar ist.
